# EUROPÄISCHE PATENTSCHRIFT

(11) **EP 2 712 074 B1**
(45) Veröffentlichungstag und Bekanntmachung des Hinweises auf die Patenterteilung: **29.06.2016**
(21) Anmeldenummer: 12401195.8
(22) Anmeldetag: 24.09.2012
(51) Int. Cl.: H02M 7/06

(54) **Schaltungsanordnung zur Spannungsversorgung eines Haushaltsgerätes**
Circuit configuration for supplying voltage to a household appliance
Circuit d'alimentation en tension d'un appareil ménager

(43) Veröffentlichungstag der Anmeldung: 26.03.2014
(73) Patentinhaber: Miele & Cie. KG, 33332 Gütersloh (DE)
(72) Erfinder: Giesbrecht, Valerij, 33034 Brakel (DE); Junkmann, Michael, 33397 Rietberg (DE)

(56) Entgegenhaltungen:
- EP-A2- 0 597 426
- DE-A1-102007 058 376
- JP-A- H06 335 251

## Beschreibung

Die Erfindung betrifft eine Schaltungsanordnung zum Betreiben eines Haushaltgerätes, umfassend ein Netzteil bzw. Übertrager mit einem Eingang für eine Wechselspannung, einem sekundärseitigen Ausgang, der mit einem Gleichrichter verbunden ist und der eine Ausgangsleitung zur Ausgabe einer gleichgerichteten Spannung umfasst, und Mittel zur Bereitstellung einer ersten Gleichspannung für einen ersten Ausgang und ferner einen Wandler zur Bereitstellung einer zweiten, sekundärseitigen Ausgangsspannung für einen zweiten Ausgang.

Haushaltgeräte benötigen in der Regel mehr als eine Gleichkleinspannung, um effektiv die Lasten in Abhängigkeit eines Steuerungsablaufes ein - bzw. auszuschalten. Hierzu wird eine Schaltungsanordnung verwendet, die an eine Netzspannung, beispielsweise 230 V oder 120 V beträgt, angeschlossen wird und die eine erste, Gleichspannung , beispielsweise im Bereich von 12 bis 24 V zur Versorgung von Leistungsteilen, wie Leuchten, Gebläse oder Servomotoren, bereitstellt und ferner eine zweite Gleichspannung im Bereich von 3 bis 5 V, um eine Steuereinheit mit einem Mikrocontroller zu versorgen.

Aus der DE 10 2007 058 376 A1 ist eine derartige Schaltungsanodnung zum Betreiben eines Haushaltgerätes bekannt. Hierbei wird die die kleinere Gleichspannung von 5V mittels eines Längsreglers aus einer höheren Gleichspannung von 9V erzeugt. Die Schaltungsanordung ist zwar recht einfach und kostengünstig aufzubauen, jedoch ist hierbei nachteilig, dass im Längsregler der komplette Spannungsabfall in Verlustwärme abgeführt wird. Der Wirkungsgrad ist hierbei recht klein. Im sogenannten Standby-Betrieb kann keine Steuerung im Hintergrund aktiviert bleiben, da die Schaltungsanordnung für energiearme Standby-Anforderungen zu viel Strom bzw. zu viel Energie aufnehmen würde.

Der Erfindung liegt somit die Aufgabe zu Grunde, eine Schaltungsanordnung zum Betreiben eines Haushaltgerätes hinsichtlich des Wirkungsgrades weiter zu verbessern.

Erfindungsgemäß wird dieses Problem durch eine Schaltungsanordnung mit den Merkmalen des unabhängigen Anspruchs 1 und durch ein Haushaltgerät gemäß Anspruch 13 gelöst. Vorteilhafte Ausgestaltungen und Weiterbildungen der Erfindung ergeben sich aus den jeweils abhängigen Ansprüchen.

Die mit der Erfindung erreichbaren Vorteile bestehen darin, dass auf einfache Weise mehr als zwei Gleichspannungen mittels einer Schaltungsanordnung zur Verfügung gestellt werden, und die Verlustleistung und damit auch aus der Verlustleistung resultierende Abwärme erheblich reduziert wird, gegenüber den bisherigen Schaltungsanordnungen zum Betreiben oder zur Spannungsversorgung von Haushaltgeräten. Die Verminderung der Verluste wird dadurch erreicht, dass der Wandler dazu eingerichtet ist, die Ausgangsleitung des Gleichrichters in einem ersten, zeitlich begrenzten Abschnitt, der kleiner ist, als die halbe Periodendauer der Wechselspannung, mit dem zweiten Ausgang für die zweite Ausgangsspannung zumindest mittelbar zu verbinden und in einem zweiten, zeitlich begrenzten Abschnitt die gleichgerichtete Ausgangsspannung von dem zweiten Ausgang zu trennen. Damit wird in einer Art Zeitmultiplex der Ausgang für die kleinere Ausgangsspannung aktiviert, derart, dass sich die vorgegebene zweite Ausgangsspannung einstellt. In der erfindungsgemäßen Schaltung muss kein Spannungsabfall durch Umwandlung in Wärmeenergie erzeugt werden. Insgesamt ist diese Schaltungsanordnung dazu geeignet, eine Steuereinrichtung im Standby-Modus zu betreiben.

In einer zweckmäßigen Ausführung ist der Wandler dazu eingerichtet, die Ausgangsleitung des Gleichrichters in einem ersten, zeitlich begrenzten Abschnitt, mit dem zweiten Ausgang für die zweite Ausgangsspannung zumindest mittelbar zu verbinden, solange die gleichgerichtete Spannung einen dem Wandler zugeführten Schwellwert unterschreitet und in einem zweiten, zeitlich begrenzten Abschnitt die gleichgerichtete Ausgangsspannung von dem zweiten Ausgang zu trennen, solange die gleichgerichtete Spannung den Schwellwert erreicht oder überschreitet. Damit werden das Verbinden und das Trennen durch die Wellenform des gleichgerichteten Spannungssignals selbst gesteuert, weitere komplizierte Steuerungsmittel oder Mikroprozessorsteuerungen sind nicht notwendig.

Insgesamt ist es dabei zweckmäßig, dass der Spitzenwert der Ausgangsspannung am zweiten Ausgang kleiner ist, als der Spitzenwert der gleichgerichteten Spannung. Damit kann auf einfache Weise eine höhere Gleichspannung für die Lasten vorgesehen werden, die direkt von der Gleichgerichteten Spannung abgeleitet wird bzw. dieser entspricht, wobei die zweite Ausgangsspannung für die Steuereinrichtung durch die vorstehend genannten Maßnahmen gewonnen wird.

In einer vorteilhaften Weiterbildung der Erfindung umfasst der Wandler Stellmittel, mit dem als Schwellwert verschiedene Spannungen eingestellt werden können. Damit kann die Schaltungsanordnung auf einfache Wese hinsichtlich der zweiten Ausgangsspannung getrimmt werden bzw. es können für den Einsatz in unterschiedlichen Haushaltsgeräten verschiedene Spannungswerte vorgesehen werden. Auch nachträgliche Änderungen können vorgenommen werden.

Zwischen dem Wandler und dem zweiten Ausgang ist ein Speichermittel zur Glättung und Stabilisierung der zweiten Ausgangsspannung angeordnet. Aufgrund des Umschaltverhaltens ist es nicht notwendig, den gesamten Spannungshub zwischen UGI und U2 durch Bauteile, wie beispielsweise Widerstände oder Längsregler in Verlustleistung umzuwandeln.In dieser Ausführung ist ein Kondensator zwischen dem Ausgang und Masse geschaltet, der eine Kapazität im Bereich von einem uF bis 2000 uF aufweist.

In einer insgesamt zweckmäßigen Ausführung umfasst die Schaltungsanordnung ein Mittel zum Verhindern eines Rückstromes vom zweiten Ausgang bzw. vom Speichermittel zum Wandler, wobei hierbei eine Diode verwendet wird. Damit wird die Glättungsfunktion weiter optimiert, da ein bereits geladener Kondensator beim Unterschreiten des pulsierenden Gleichspannungswertes am Gleichrichterausgang nicht zur Entladung führt. Die Entladung kann nur die Last am Ausgang für die zweite Spannung bewirken.

In einer insgesamt vorteilhaften Ausführung ist zwischen dem Gleichrichter und dem ersten Ausgang ein Speichermittel angeordnet zur Glättung und Stabilisierung der ersten Ausgangsspannung und/oder ein Mittel zum Verhindern eines Rückstromes vom ersten Ausgang bzw. vom Speichermittel zum Gleichrichter. Dabei reicht es häufig aus, die gleichgerichtete Spannung direkt dem ersten Ausgang zuzuführen.

In einer weiteren, zweckmäßigen Ausführung der Erfindung ist das Mittel zur Bereitstellung der ersten Gleichspannung dazu ausgebildet ist, die Ausgangsleitung des Gleichrichters in dem ersten, zeitlich begrenzten Abschnitt, der kleiner ist, als die halbe Periodendauer der Wechselspannung, von dem ersten Ausgang für die erste Ausgangsspannung zu trennen und in dem zweiten, zeitlich begrenzten Abschnitt die gleichgerichtete Ausgangsspannung mit dem ersten Ausgang zumindest mittelbar oder unmittelbar zu verbinden. Somit wird eine zumindest nahezu gleichmäßige Belastung des Trafos und des Gleichrichters über eine gesamte Periodendauer erreicht, sodass sogenannte Rückwirkungen auf den Netzspannungseingang und damit auf das Versorgungsnetz sehr klein gehalten bzw. vermieden werden.

Es ist insgesamt vorteilhaft, dass der Wandler zumindest einen Halbleiterschalter zum Verbinden und zum Trennen der Ausgangsleitung des Gleichrichters mit dem zweiten Ausgang umfasst. Ein Halbleiterschalter lässt sich recht einfach ansteuern und für die gegebenen Anforderungen in einem Haushaltgerät anpassen. Dabei können Bipolar oder Feldeffekt-Transistoren in einer Beschaltung als Schalter verwendet werden. In einer vorteilhaften Weiterbildung besteht der Halbleiterschalter aus einer Darlingtonschaltung mit zumindest zwei Transistoren. Dabei steht der Halbleiterschalter zu seiner Ansteuerung vorzugsweise mittels einer Steuerschaltung in Wirkverbindung. Die Steuerschaltung ist dabei wiederum als Spannungsteiler, beispielsweise aus Widerständen oder einer Kombination aus Widerständen mit entsprechend verschalteten Transistoren, ausgebildet, der mit einem Stellmittel zur Beeinflussung des Schwellwertes in Wirkverbindung steht.

Die Erfindung betrifft ferner ein Haushaltgerät mit zumindest einer Last und einer Steuereinrichtung, wobei die Steuereinrichtung dazu eingerichtet ist, zu bewirken der Last elektrische Energie zuzuführen oder abzuschalten, wobei das Haushaltgerät eine Schaltungsanordnung wie vorstehend beschrieben, umfasst, um die Last mit einer ersten Spannung und die Steuereinrichtung mit einer zweiten Spannung zu versorgen.

Ein Ausführungsbeispiel der Erfindung ist in den Zeichnungen rein schematisch dargestellt und wird nachfolgend näher beschrieben. Es zeigt
- Fig. 1:: Schaltungsanordnung in einem schematischen Blockschaltbild;
- Fig. 2:: eine Ausführung der Schaltungsanordnung als Stromlaufplan und
- Fig. 3a - 3c: in einem Zeitdiagramm das Prinzip einer erfindungsgemäßen Ausführung.

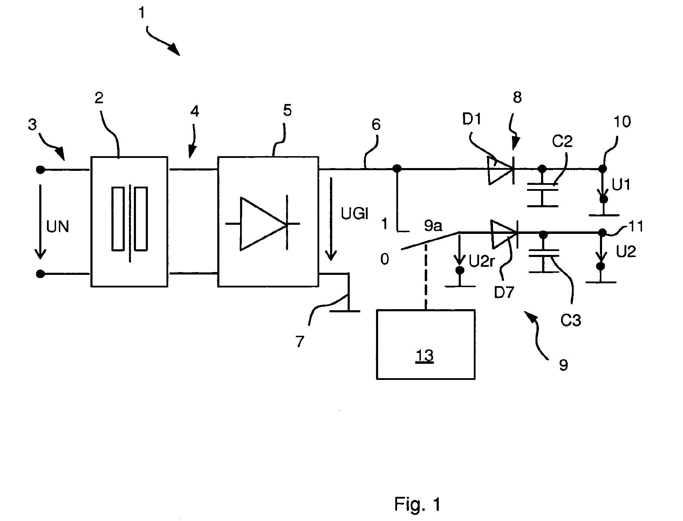

Fig. 1 zeigt die. Die Netzspannung UN liegt an den Eingangsklemmen 3 des Übertragers 2 an, der sekundärseitig an seinen Ausgangsklemmen 4 eine Effektivspannung von 24 V bereitstellt. Die Sekundärspannung wird einem Gleichrichter 5 zugeführt, dessen Ausgangsspannung UGI dem Ausgang 10 für die erste, höhere Gleichspannung U1 geführt wird. Als Mittel 8 für die Bereitstellung der ersten Gleichspannung U1 dienen hierbei ein Speicher C2, hier ein Kondensator, mit dem die pulsierende Ausgangsspannung UGI geglättet wird, wobei mit der Diode D1 zwischen dem Gleichrichter 5 und dem Speicher C2 ein Rückstrom vom Speicher C2 in Richtung Gleichrichter 5 bzw. weiteren Schaltungsteilen für die Bereitstellung der zweiten, geringeren Gleichspannung U2 verhindert wird.

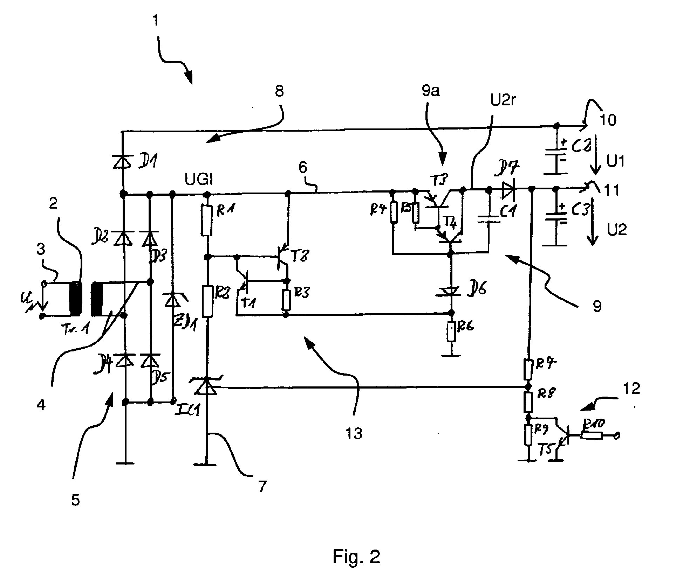

Als Wandler 9 wird ein Schalter 9a, hier ein elektronischer Schalter, der mittels einer Transistorschaltung T3, T4 (Fig. 2) bereitgestellt wird, verwendet, der mittels der Steuerschaltung 13 abhängig von der Ausgangsspannung UGI den Ausgang 11 mit der Gleichspannung UGI verbindet (1) und trennt (0). Dem schematischen Schalter 9a ist ein Speicher C3 nachgeschaltet, um eine Glättung der welligen bzw. der einzelnen Spannungspulse U2 zu bewirken. Die Diode D7 verhindert hierbei Rückströme in Richtung des elektronischen Schalters 9a und zum Gleichrichter 5. Die Steuerschalung 13 ist durch eine Transistorschaltung T2, T3 (Fig. 2) mit entsprechender Beschaltung R3, R1, R2 IC1 zur Schwellwerterkennung in Verbindung mit dem Spannungsteiler R7, R8 und R9 zur Schwellwertfestlegung.

Fig. 2 zeigt ein Beispiel einer erfindungsgemäßen Schaltungsanordnung, die aus einer Eingangswechselspannung von 230 V eine erste Gleichspannung von 12 oder 24 V und eine weitere Gleichspannung von 3,3 V oder 5 V bereitstellt.

Zum Betrieb einer Schaltung werden vielfach 2 unterschiedliche Spannungen benötigt, 12V oder 24V zur Ansteuerung von Relais und 3,3V oder 5V zum Betrieb des Controllers und der Sensorik. Vielfach wird die Versorgungsspannung für den Controller und die Sensorik mittels linearen Festspannungsreglers aus der höheren Spannung gewonnen.

In diesem Fall ergeben sich folgende Nachteile:
1. Im Standby-Betrieb des Gerätes ergibt sich eine recht hohe Leistung, da der Strom zum Betrieb eines Controllers der Steuereinrichtung oder Bedieneinrichtung und der Sensorik, mit der höheren Spannung die die Relais versorgt, multipliziert werden muss, dadurch errechnet sich die recht hohe Standby-Leistung.
2. Der Trafo wird nicht optimal genutzt, da er hier nur in den Zeiträumen Leistung übertragen kann, in denen der Betrag der Sekundärspannung größer als die hohe Gleichspannung plus 2 Diodenflussspannungen ist.

Beide Nachteile werden vorteilhaft erfindungsgemäß folgendermaßen beseitigt:
Die Darlingtonschaltung, bestehend aus den Transistoren T3 und T4 arbeitet im Schalterbetrieb, dabei sind die Transistoren T3, T4 leitend, bis die Spannung an C3 3,3V erreicht hat. Der Spannungsteiler, bestehend aus den Widerständen R7, R8 und R9 ist so ausgelegt, dass bei 3,3V an C1, 2,495V am Eingang von IC1, das eine einstellbare Konstantspannungsquelle, wie eine sogenannte Bandgap, nachbildet bzw. eine in beiden Richtungen wirkende Zener-Diode, (TL431) liegen. Ab diesem Spannungswert wird IC1 leitend und steuert T2 an. Der T2 steuert nun T1 an, dadurch geht diese Thyristornachbildung bis zum nächsten Nulldurchgang der Sekundärspannung des Trafos in Selbsthaltung. Das bewirkt, dass der durch R6 fließende Basisstrom von T4 nun von den Transistoren T1 und T2 übernommen wird, was zum Sperren der Darlingtonschaltung T3, T4 führt. Unter Berücksichtigung der Spannungsabfälle an den Dioden des Gleichrichters 5 und der Diode D6 und der Darlingtonschaltung T3, T4, liegt der Betrag der Sekundärspannung des Trafos 2 zu diesem Zeitpunkt erst bei ca. 6,5V, wodurch der Ausgangsstrom am zweiten Ausgang 11 für die kleinere Spannung von U2 nur eine kleine Leistung bzw. Verlustleistung bewirkt.

Durch das Einschalten von T5 kann die Spannung von 3,3V auf 5V umgeschaltet werden, da dann der Widerstand R9 überbrückt ist und dadurch nur die Widerstände R7 und R8 des Spannungsteilers wirksam sind.

Die optimalere Nutzung des Trafos 2 ergibt sich dadurch, dass die Leistung für U1 und U2 nicht mehr gleichzeitig, sondern zeitlich nacheinander übertragen wird.

Vorteile der erfindungsgemäßen Schaltungsanordnung sind dabei im Wesentlichen:
1. Einfaches und kostengünstiges Verfahren zur Verringerung der Standby-Verluste bei Einsatz eines Netzteiltrafos 2, es sind nur wenige preiswerte Bauteile erforderlich.
2. Die Schaltung liefert bei U2 eine variable und geregelte Spannung, somit kann ein sonst erforderlicher Spannungsregler eingespart werden.
3. Da bei diesem Verfahren der Trafo 2 insgesamt weniger Leistung übertragen muss, und er diese zudem noch aufgeteilt zeitlich nacheinander überträgt, kann der Übertrager für eine geringere Leistung bzw. geringeren maximalen Übetragungsstrom ausgelegt werden, sodass dieser platzsparend und kostengünstiger ausgelegt werden.

Da bei einem möglichen kleineren Übertrager 2 bzw. Trafo die Leerlaufverlustleistung kleiner ist, werden Standby Verluste gering gehalten, wenn die Versorgungsspannung U2 im Standby-Betrieb aktiviert ist.

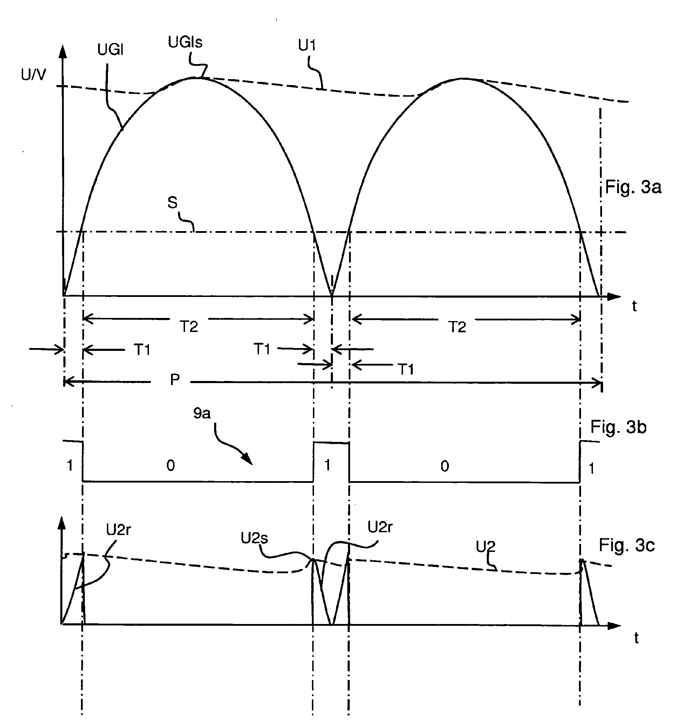

Fig. 3a - 3c zeigen in einem Zeitdiagramm das Prinzip einer erfindungsgemäßen Ausführung der Schaltungsanordnung 1. In Fig. 3a ist die Wellenform der gleichgerichteten Spannung UGI aufgezeigt. Die Ausgangsspannung U1 ist hierbei als geglättete Kennlinie von UGI zu erkennen. Der Scheitelpunkt UGIs ist dabei um den Betrag der Durchlassspannung der Diode D1 höher, als der Scheitelwert der Restwelligkeit Ausgangsspannung U1.

Fig. 3b und 3c zeigen das Schaltverhalten des Schalters 9a. Beim Anstieg der Halbwelle der Spannung UGI von 0 bis zum Schwellwert S ist der Schalter 9a in der Stellung 1, sodass in dieser Zeit UGI mit dem Ausgang 11 zumindest mittelbar oder unmittelbar verbunden ist. Sobald der UGI den Schwellwert S erreicht bzw. höher ist, wird der Schalter in die Stellung 0 gefahren, sodass UGI vom Ausgang 11 getrennt ist. Zu erkennen ist dies daran, dass nur ein kurzer Puls der Länge T1 zum zweiten Ausgang 11 übertragen wird. Um eine brauchbare Gleichspannungsversorgung U2 zu erreichen, werden die Pulse U2r mittels des Ladungsspeichers C3 zu einer Gleichspannung geglättet, die eine Restwelligkeit U2s aufweisen kann.

## Patentansprüche

1. Schaltungsanordnung (1) zum Betreiben eines Haushaltgerätes, umfassend ein Netzteil bzw. Übertrager (2) mit einem Eingang (3) für eine Wechselspannung (UN), einem sekundärseitigen Ausgang (4), der mit einem Gleichrichter (5) verbunden ist und der eine Ausgangsleitung (6, 7) zur Ausgabe einer gleichgerichteten, Spannung (UGI) umfasst, und Mittel (8) zur Bereitstellung einer ersten Gleichspannung (U1) für einen ersten Ausgang (10) und femer einen Wandler (9) zur Bereitstellung einer zweiten, sekundärseitigen Ausgangsspannung (U2) für einen zweiten Ausgang (11),
**dadurch gekennzeichnet,**
**dass** der Wandler (9) dazu eingerichtet ist, die Ausgangsleitung (6) des Gleichrichters (5) in einem ersten, zeitlich begrenzten Abschnitt (T1), der kleiner ist, als die halbe Periodendauer (P) der Wechselspannung (UN), mit dem zweiten Ausgang (11) für die zweite Ausgangsspannung (U2) zumindest mittelbar zu verbinden und in einem zweiten, zeitlich begrenzten Abschnitt (T2) die gleichgerichtete Ausgangsspannung (UGI) von dem zweiten Ausgang (11) zu trennen, wobei der Spitzenwert (U2s) der Ausgangsspannung am zweiten Ausgang (11) kleiner ist, als der Spitzenwert (UGIs) der gleichgerichteten Spannung (UGI).

2. Schaltungsanordnung nach Anspruch 1,
**dadurch gekennzeichnet,**
**dass** der Wandler (9) dazu eingerichtet ist, die Ausgangsleitung (6) des Gleichrichters (5) in dem ersten, zeitlich begrenzten Abschnitt (T1), mit dem zweiten Ausgang (11) für die zweite Ausgangsspannung (U2) zumindest mittelbar zu verbinden, solange die gleichgerichtete Spannung (UGI) einen dem Wandler zugeführten Schwellwert (S) unterschreitet und in dem zweiten, zeitlich begrenzten Abschnitt (T2) die gleichgerichtete Ausgangsspannung (UGI) von dem zweiten Ausgang (11) zu trennen, solange die gleichgerichtete Spannung (UGI) den Schwellwert (S) erreicht oder überschreitet.

3. Schaltungsanordnung nach Anspruch 2,
**dadurch gekennzeichnet,**
**dass** der Wandler (9) Stellmittel (12) umfasst, mit dem als Schwellwert (S) verschiedene Spannungen eingestellt werden können.

4. Schaltungsanordnung nach Anspruch 1,
**dadurch gekennzeichnet,**
**dass** zwischen dem Wandler (9) und dem zweiten Ausgang (11) ein Speichermittel (C3) angeordnet ist zur Glättung und Stabilisierung der zweiten Ausgangsspannung (U2).

5. Schaltungsanordnung nach Anspruch 1 oder 4,
**dadurch gekennzeichnet,**
**dass** ein Mittel (D7) zum Verhindern eines Rückstromes vom zweiten Ausgang (11) bzw. vom Speichermittel (C3) zum Wandler (9).

6. Schaltungsanordnung nach Anspruch 1,
**dadurch gekennzeichnet,**
**dass** zwischen dem Gleichrichter (5) und dem ersten Ausgang (10) ein Speichermittel (C2) angeordnet ist zur Glättung und Stabilisierung der ersten Ausgangsspannung (U1) und/oder ein Mittel (D1) zum Verhindern eines Rückstromes vom ersten Ausgang (10) bzw. vom Speichermittel (C2) zum Gleichrichter (5).

7. Schaltungsanordnung nach Anspruch 1,
**dadurch gekennzeichnet,**
**dass** das Mittel (8) zur Bereitstellung der ersten Gleichspannung (U1) dazu ausgebildet ist, die Ausgangsleitung (6) des Gleichrichters (5) in dem ersten, zeitlich begrenzten Abschnitt (T1), der kleiner ist, als die halbe Periodendauer (P) der Wechselspannung (UN), von dem ersten Ausgang (10) für die erste Ausgangsspannung (U1) zu trennen und in dem zweiten, zeitlich begrenzten Abschnitt (T2) die gleichgerichtete Ausgangsspannung (UGI) mit dem ersten Ausgang (10) zumindest mittelbar oder unmittelbar zu verbinden.

8. Schaltungsanordnung nach einem der Ansprüche 1 bis 3,
**dadurch gekennzeichnet,**
**dass** der Wandler (9) zumindest einen Halbleiterschalter (9a, T3, T4) zum Verbinden und zum Trennen der Ausgangsleitung (6) des Gleichrichters (5) mit dem zweiten Ausgang (11) umfasst.

9. Schaltungsanordnung nach Anspruch 8,
**dadurch gekennzeichnet,**
**dass** der Halbleiterschalter (9a) aus einer Darlingtonschaltung mit zumindest zwei Transistoren (T3, T4) besteht.

10. Schaltungsanordnung nach Anspruch 8 oder 9,
**dadurch gekennzeichnet,**
**dass** der Halbleiterschalter (9a) zu seiner Ansteuerung mittels einer Steuerschaltung (13) in Wirkverbindung steht.

11. Schaltungsanordnung nach Anspruch 10,
**dadurch gekennzeichnet,**
**dass** die Steuerschaltung (13) als Spannungsteiler (R1, R2) ausgebildet ist, der mit einem Stellmittel (12, T2, T1) zur Beeinflussung des Schwellwertes (S) in Wirkverbindung steht.

12. Haushaltgerät mit zumindest einer Last und einer Steuereinrichtung, wobei die Steuereinrichtung dazu eingerichtet ist, zu bewirken, der Last elektrische Energie zuzuführen oder abzuschalten, wobei das Haushaltgerät eine Schaltungsanordnung (1) gemäß einem der Ansprüche 1 bis 11 umfasst, um die Last mit einer ersten Spannung (U1) und die Steuereinrichtung mit einer zweiten Spannung (U2) zu versorgen.

## Claims

1. Circuit arrangement (1) for operating a domestic appliance, comprising a power supply or transformer (2) having an input (3) for an alternating voltage (U N), an output (4) on the secondary side which is connected to a rectifier (5) and comprises an output line (6, 7) for outputting a rectified voltage (UGI), and means (8) for providing a first direct voltage (U1) for a first output (10), and also a converter (9) for providing a second output voltage (U2) on the secondary side for a second output (11),
**characterised in that**
the converter (9) is designed to connect, at least indirectly, the output line (6) of the rectifier (5) in a first, temporally limited interval (T1), which is smaller than the half period (P) of the alternating voltage (UN), to the second output (11) for the second output voltage (U2), and to disconnect the rectified output voltage (UGI) from the second output (11) in a second, temporally limited interval (T2), the peak value (U2s) of the output voltage at the second output (11) being lower than the peak value (UGls) of the rectified voltage (UGI).

2. Circuit arrangement according to claim 1,
**characterised in that**
the converter (9) is designed to connect, at least indirectly, the output line (6) of the rectifier (5) in the first, temporally limited interval (T1) to the second output (11) for the second output voltage (U2), provided the rectified voltage (UGI) is below a threshold value (S) supplied to the converter, and to disconnect the rectified output voltage (UGI) from the second output (11) in the second, temporally limited interval (T2), provided the rectified voltage (UGI) reaches or exceeds the threshold value (S).

3. Circuit arrangement according to claim 2,
**characterised in that**
the converter (9) comprises adjustment means (12) by means of which various voltages can be set as the threshold value (S).

4. Circuit arrangement according to claim 1,
**characterised in that**
an accumulating means (C3) is arranged between the converter (9) and the second output (11) for smoothing and stabilising the second output voltage (U2).

5. Circuit arrangement according to either claim 1 or claim 4,
**characterised in that**
a means (D7) for preventing a reverse current from the second output (11) or from the accumulating means (C3) to the converter (9).

6. Circuit arrangement according to claim 1,
**characterised in that**
an accumulating means (C2) is arranged between the rectifier (5) and the first output (10) for smoothing and stabilising the first output voltage (U1) and/or a means (D1) is arranged therebetween for preventing a reverse current from the first output (10) or from the accumulating means (C2) to the rectifier (5).

7. Circuit arrangement according to claim 1,
**characterised in that**
the means (8) for providing the first direct voltage (U1) is designed to disconnect the output line (6) of the rectifier (5) in the first, temporally limited interval (T1), which is smaller than the half period (P) of the alternating voltage (UN), from the first output (10) for the first output voltage (U1) and to connect, at least indirectly or directly, the rectified output voltage (UGI) to the first output (10) in the second, temporally limited interval (T2).

8. Circuit arrangement according to any of claims 1 to 3,
**characterised in that**
the converter (9) comprises at least one semiconductor switch (9a, T3, T4) for connecting and disconnecting the output line (6) of the rectifier (5) to/from the second output (11).

9. Circuit arrangement according to claim 8,
**characterised in that**
the semiconductor switch (9a) consists of a Darlington circuit having at least two transistors (T3, T4).

10. Circuit arrangement according to either claim 8 or claim 9,
**characterised in that**
the semiconductor switch (9a) is operatively connected in order to be activated by means of at least one control circuit (13).

11. Circuit arrangement according to claim 10,
**characterised in that**
the control circuit (13) is in the form of a voltage divider (R1, R2) that is operatively connected to an adjustment means (12, T2, T1) in order to influence the threshold value (S).

12. Domestic appliance comprising at least one load and a control device, wherein the control device is designed to cause electrical energy to be supplied to the load or to be disconnected, wherein the domestic appliance comprises a circuit arrangement (1) according to any of claims 1 to 11 in order to supply the load with a first voltage (U1) and the control device with a second voltage (U2).

## Revendications

1. Agencement de circuit (1) pour le fonctionnement d'un appareil électroménager, comprenant un bloc d'alimentation ou respectivement un transformateur (2) avec une entrée (3) pour une tension alternative (UN), une sortie (4) côté secondaire qui est connectée à un redresseur (5) et qui comprend une ligne de sortie (6, 7) pour la délivrance d'une tension (UGI) redressée, et des moyens (8) destinés à la fourniture d'une première tension continue (U1) pour une première sortie (10) et également un convertisseur (9) pour la fourniture d'une deuxième tension de sortie (U2) côté secondaire pour une deuxième sortie (11),
**caractérisé en ce que**
le convertisseur (9) est aménagé pour connecter au moins indirectement la ligne de sortie (6) du redresseur (5), dans un premier tronçon (T1) limité temporellement qui est plus petit que la demi-période (P) de la tension alternative (UN), à la deuxième sortie (11) pour la deuxième tension de sortie (U2) et pour, dans un deuxième tronçon (T2) limité temporellement, opérer une séparation entre la tension de sortie (UGI) redressée et la deuxième sortie (11), dans lequel la valeur de pointe (U2s) de la tension de sortie sur la deuxième sortie (11) est plus faible que la valeur de pointe (UGIs) de la tension (UGI) redressée.

2. Agencement de circuit selon la revendication 1,
**caractérisé en ce que**
le convertisseur (9) est aménagé pour connecter au moins indirectement la ligne de sortie (6) du redresseur (5), dans le premier tronçon (T1) limité temporellement, à la deuxième sortie (11) pour la deuxième tension de sortie (U2) tant que la tension (UGI) redressée est inférieure à une valeur de seuil (S) acheminée au convertisseur et pour, dans le deuxième tronçon (T2) limité temporellement, opérer une séparation entre la tension de sortie (UGI) redressée et la deuxième sortie (11) tant que la tension (UGI) redressée est égale ou supérieure à la valeur de seuil (S).

3. Agencement de circuit selon la revendication 2,
**caractérisé en ce que**
le convertisseur (9) comprend des moyens de réglage (12) avec lesquels différentes tensions peuvent être réglées en tant que valeur de seuil (S).

4. Agencement de circuit selon la revendication 1,
**caractérisé en ce que**,
entre le convertisseur (9) et la deuxième sortie (11), il est disposé un moyen d'accumulateur (C3) pour le lissage et la stabilisation de la deuxième tension de sortie (U2).

5. Agencement de circuit selon la revendication 1 ou 4,
**caractérisé en ce**
**qu'**un moyen (D7) pour empêcher un reflux à partir de la deuxième sortie (11) ou respectivement du moyen d'accumulateur (C3) vers le convertisseur (9).

6. Agencement de circuit selon la revendication 1,
**caractérisé en ce que**,
entre le redresseur (5) et la première sortie (10), il est disposé un moyen d'accumulateur (C2) pour le lissage et la stabilisation de la première tension de sortie (U1) et/ou un moyen (D1) pour empêcher un reflux à partir de la première sortie (10) ou respectivement à partir du moyen d'accumulateur (C2) vers le redresseur (5).

7. Agencement de circuit selon la revendication 1,
**caractérisé en ce que**
le moyen (8) pour la fourniture de la première tension continue (U1) est constitué pour opérer une séparation entre la ligne de sortie (6) du redresseur (5), dans le premier tronçon (T1) limité temporellement qui est plus petit que la demi-période (P) de la tension alternative (UN), et la première sortie (10) pour la première tension de sortie (U1) et pour, dans le tronçon (T2) limité temporellement, connecter, au moins indirectement ou directement, la tension de sortie (UGI) redressée à la première sortie (10).

8. Agencement de circuit selon l'une des revendications 1 à 3,
**caractérisé en ce que**
le convertisseur (9) comprend au moins un commutateur à semi-conducteur (9a, T3, T4) pour la connexion et pour la séparation de la ligne de sortie (6) du redresseur (5) à/de la deuxième sortie (11).

9. Agencement de circuit selon la revendication 8,
**caractérisé en ce que**
le commutateur à semi-conducteur (9a) se compose d'un montage Darlington avec au moins deux transistors (T3, T4).

10. Agencement de circuit selon la revendication 8 ou 9,
**caractérisé en ce que**
le commutateur à semi-conducteur (9a) est en liaison opératoire pour son pilotage au moyen d'un circuit de commande (13).

11. Agencement de circuit selon la revendication 10,
**caractérisé en ce que**
le circuit de commande (13) est constitué en tant que diviseur de tension (R1, R2) qui est en liaison opératoire avec un moyen de réglage (12, T2, T1) pour agir sur la valeur de seuil (S).

12. Appareil électroménager avec au moins une charge et un dispositif de commande, le dispositif de commande étant aménagé pour acheminer de l'énergie électrique à la charge ou la couper, l'appareil électroménager comprenant un agencement de circuit (1) selon l'une des revendications 1 à 11 pour alimenter la charge avec une première tension (U1) et le dispositif de commande avec une deuxième tension (U2).
